# FASCICULE DE BREVET EUROPEEN

(11) **EP 2 255 509 B1**
(45) Date de publication et mention de la délivrance du brevet: **29.04.2020**
(21) Numéro de dépôt: 09731192.2
(22) Date de dépôt: 20.03.2009
(51) Int. Cl.: H04L 29/06

(54) **PROCÉDÉ D'ACCÈS À UN SERVICE, DISPOSITIF ET PRODUIT PROGRAMME D'ORDINATEUR CORRESPONDANTS**
VERFAHREN ZUM DIENSTZUGRIFF, ZUGEHÖRIGE VORRICHTUNG UND COMPUTERPROGRAMM-PRODUKT
METHOD OF ACCESSING A SERVICE, CORRESPONDING DEVICE AND COMPUTER PROGRAM PRODUCT

(30) Priorité: 20.03.2008 FR 0851825
(43) Date de publication de la demande: 01.12.2010
(73) Titulaire: Orange, 75015 Paris (FR)
(72) Inventeur: CASTELAIN, Aymeric, F-92130 Issy les Moulineaux (FR); GLAZIOU, Stéphane, F-35690 Acigne (FR); LANDAU, Olivier, F-75003 Paris (FR)
(74) Mandataire: Vidon Brevets & Stratégie
(86) Numéro de dépôt international: PCT/FR2009/050482
(87) Numéro de publication internationale: WO 2009/125108

(56) Documents cités:
- WO-A-01/07981
- US-A1- 2005 278 419

## Description

### 1 DOMAINE DE L'INVENTION

La présente invention se rapporte au domaine des services délivrés sur un réseau de communication de type Internet.

La présente invention se rapporte plus particulièrement à l'optimisation de la fourniture de tels services notamment vers des utilisateurs nomades.

### 2 SOLUTIONS DE L'ART ANTERIEUR

L'avènement de l'Internet et des techniques de connexion à haut débit a entraîné un développement de différents services à destination des utilisateurs, tels que par exemple l'accès à des programmes de télévision, les communications (voix et/ou images),...

Cependant, les passerelles domestiques actuelles sont limitées à un usage fixe. En effet, l'utilisateur ne dispose pleinement des services auxquels il a souscrit que lorsqu'il se trouve à l'emplacement physique de sa connexion haut débit, c'est-à-dire généralement à son domicile.

Lorsqu'il est en situation de mobilité, un utilisateur doit configurer son accès réseau pour connecter chacun des terminaux en sa possession et pour lesquels il souhaite disposer d'une connexion à l'Internet (par exemple, un ordinateur portable). Cependant, une telle configuration de connexion « nomade » ne permet pas à cet utilisateur de disposer des services auxquels il a souscrit (par exemple la télévision) et qui sont affectés à sa passerelle domestique, par le biais d'une localisation physique fixe de celle-ci. Une telle impossibilité entraîne un effet déceptif important et une utilisation moindre de ces services, sources de revenus pour les opérateurs.

Un autre problème est lié aux terminaux dédiés à un usage précis (appareils photo numériques, lecteurs mp3, cadres photo par exemple) qui ne possèdent généralement pas de fonctions de communication intégrée ou pour ceux qui possèdent de telles capacités de communication, qui n'associent cependant pas les fonctions d'identité et de services.

En d'autres termes, des terminaux dédiés, même s'ils possèdent des capacités de communication, ne sont généralement pas aptes à mettre en œuvre des services qui nécessiteraient l'utilisation de telles capacités de communication. Par exemple, un cadre photo ne peut pas être utilisé pour restituer des programmes de télévision numérique auquel un utilisateur a souscrit par l'intermédiaire d'un forfait Internet haut débit et ce que l'utilisateur soit chez lui ou en situation de mobilité (par exemple chez une autre personne).

On constate ainsi, dans l'état actuel de la technique, que les services à large bande (télévision numérique, téléphonie IP, etc.) sont dépendants de la ligne fixe de l'abonné et que la plupart des fonctions des terminaux en possession de l'utilisateur sont éclatées. A l'heure actuelle, il est donc impossible pour un abonné d'avoir accès en mobilité à une offre de services (accès haut débit à un réseau de communication, partages de documents multimédias du type photos, vidéos, etc.) auxquels il a préalablement souscrit et auxquels il accède habituellement depuis un terminal de communication fixe, le plus souvent du type ordinateur de bureau.

La demande de brevet américain US 2005/278419 divulgue une méthode et un système pour associer des actions et des ressources. Selon cette demande de brevet américain, un terminal client est configuré pour recevoir les requêtes exécution d'actions et dispose d'une configuration spécifique permettant d'accéder à des ressources en fonction de l'action qui était requise. Cependant, cette méthode n'apporte pas de solution au problème relatif à la possibilité pour un utilisateur de bénéficier des services auxquels il a souscrit lors d'une opération de mobilité.

### 3 RESUME DE L'INVENTION

La solution proposée par l'invention ne présente pas ces inconvénients de l'art antérieur. Elle concerne en effet un procédé d'accès à au moins un service préalablement souscrit par un utilisateur, et accessible via au moins un premier réseau de communication selon la revendication 1, un dispositif de contrôle aux caractéristiques correspondantes selon la revendication 7, une passerelle mobile, comprenant un tel dispositif de contrôle, selon la revendication 8 et enfin un programme produit d'ordinateur selon la revendication 9.

Un tel procédé comprend les étapes suivantes :
- sélection, par un dispositif de contrôle, d'un second réseau de communication, parmi au moins deux réseaux de communication possibles ;
- transmission, par ledit dispositif de contrôle, via ledit second réseau de communication, d'au moins un identifiant dudit utilisateur, à destination d'une entité de gestion dudit premier réseau de communication ;
- réception, par ledit dispositif de contrôle, d'au moins un paramètre de configuration d'un dispositif de mise en œuvre dudit service, délivré par ladite entité de gestion ;
- configuration dudit dispositif de mise en œuvre dudit service, en fonction dudit paramètre de configuration, de façon qu'il puisse mettre en œuvre ledit service par l'intermédiaire dudit premier réseau.

Ainsi, à la différence des techniques de l'art antérieur qui fixent la mise en œuvre de services au niveau d'une adresse physique, l'invention permet d'accéder à un service en fonction de la localisation de l'utilisateur. Un tel accès est rendu possible grâce à la sélection d'un réseau sur lequel transmettre un identifiant de l'utilisateur. Cette transmission, à destination d'une entité de gestion centralisée permet à cette entité de fournir des paramètres de configuration au dispositif de mise ne œuvre du service. En d'autres termes, l'invention permet d'avoir accès aux services de l'utilisateur sans considération de l'endroit où l'on se trouve. Ledit procédé est caractérisé en ce qu'il comprend une étape d'adaptation dudit au moins un service à mettre en œuvre, ladite étape tenant compte d'au moins un paramètre représentatif d'au moins un point d'accès audit premier réseau.

Ainsi l'invention ne se contente pas de fournir à l'identique le service auquel l'utilisateur a souscrit. L'invention permet d'adapter ce service en fonction de paramètres physiques. Par exemple, lorsque l'utilisateur se trouve dans un lieu où un accès Internet haut débit n'est pas disponible, l'invention permet d'attribuer tout de même un service d'accès à l'Internet en bas débit.

Une telle solution est apportée dans au moins un mode de réalisation de l'invention par la fourniture, à un dispositif de mise en œuvre du procédé selon l'invention, d'un paramètre de configuration du service. Le paramètre lié à la localisation de l'utilisateur peut également être obtenu par l'intermédiaire du dispositif de contrôle. L'adaptation permet en quelque sorte de moduler le service à rendre en fonction de caractéristiques des moyens de mise en œuvre de service.

Dans un autre exemple, l'utilisateur a souscrit à un service de télévision haute définition pour son domicile. Il détient un dispositif de contrôle selon l'invention et souhaite profiter de son service de télévision au domicile d'un de ses amis. Malheureusement, les caractéristiques physiques des points d'accès aux réseaux au domicile de cet ami ne lui permettent pas de recevoir la télévision en haute définition. L'invention procédera alors par exemple à une adaptation du service en transformant le service de télévision haute définition en un service de télévision en définition classique apte à être mis en œuvre chez l'ami de l'utilisateur.

Selon une caractéristique particulière de l'invention, ledit procédé comprend une étape d'authentification dudit utilisateur auprès de ladite première entité au moyen dudit au moins un identifiant dudit utilisateur et d'au moins un certificat d'authentification contenu dans ledit dispositif de contrôle.

Ainsi, l'invention permet de vérifier que l'utilisateur pour lequel on rend accessible le service dispose bien de droits permettant de réaliser une telle opération. En d'autres termes, l'authentification permet de vérifier que l'utilisateur peut rendre le service accessible par l'intermédiaire du dispositif de contrôle, même si cet utilisateur ne se trouve pas chez lui.

Selon un mode de réalisation particulier de l'invention, ledit procédé comprend une étape de pilotage, par ledit dispositif de contrôle, dudit dispositif de mise en œuvre dudit au moins un service.

Ainsi, l'invention permet non seulement de fournir les services auquel l'utilisateur a souscrit, mais elle permet en outre de piloter le dispositif en question. L'invention permet donc de prendre le contrôle ou d'interagir avec le dispositif. A titre illustratif, si le procédé de l'invention est mis en œuvre au niveau d'un appareil photo numérique, l'invention permet de prendre le contrôle de cet appareil pour lui faire exécuter des tâches pour lesquels il n'est pas programmé à l'origine. Un tel pilotage est possible car ce type d'appareil utilise en règle générale des systèmes d'exploitation ouverts de type « Linux » (marque déposée) pour fonctionner. Or le mode de fonctionnement de ce type de système d'exploitation est bien connu. Ainsi, le dispositif de contrôle peut piloter le dispositif de mise en œuvre du service.

D'autres appareils (tels des lecteurs MP3 ou des lecteurs MPEG4 utilisent des langages d'interfaçage basés sur le langage «Adobe Flash » (Marque déposée)). De tels appareils peuvent également faire l'objet d'un pilotage au sens de l'invention.

Selon une caractéristique particulière de l'invention, préalablement à ladite étape de pilotage, ledit procédé comprend :
- une étape d'obtention d'un identifiant dudit dispositif de mise en œuvre ;
- une étape d'obtention, par ledit dispositif de contrôle, auprès d'une deuxième entité dudit deuxième réseau de communication, d'un microprogramme de pilotage adapté au pilotage dudit dispositif de mise en œuvre dudit au moins un service.

Ainsi, l'invention permet de se prémunir de l'impossibilité de piloter le dispositif de mise en œuvre du service en fournissant, à une deuxième entité du réseau deuxième réseau de communication, un identifiant du dispositif de mise en œuvre du service. Un tel identifiant peut, dans un mode de réalisation de l'invention, se présenter sous la forme de la marque et du modèle du dispositif. De tels identifiants sont aisément accessibles lorsque par exemple le dispositif dont il faut prendre le contrôle dispose d'une interface USB (de l'anglais « Universal Serial Bus » pour « Bus Série Universel ») ou qu'il intègre un logement pour une carte mémoire (du type de celles déjà mentionnées : « MMC », « SD », « MicroSD », « CF »). Cette deuxième entité fournit ensuite un microprogramme au dispositif de contrôle. Ce microprogramme est un programme de pilotage du dispositif de mise en œuvre du service.

Selon une caractéristique particulière de l'invention ledit premier réseau de communication et ledit deuxième réseau de communication sont un seul et même réseau de communication.

Ainsi, l'invention permet de se connecter directement à un réseau de communication qui correspond à celui auquel l'entité de gestion appartient.

Selon un mode de réalisation particulier de l'invention, ledit premier réseau de communication est un réseau filaire et en ce que ledit deuxième réseau de communication est un réseau mobile.

Dans un mode de réalisation particulier de l'invention, la technologie ADSL est utilisée pour accéder au réseau filaire et les technologies GSM et/ou 3G sont utilisés pour accéder au réseau mobile

### 4 LISTE DES FIGURES

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure 1 présente un synoptique du procédé de l'invention ;
- la figure 2 présente un mode de réalisation spécifique, sous la forme d'une passerelle mobile pour la mise en œuvre de l'invention décrite en relation avec la figure 1 ;
- la figure 3 décrit une mise en œuvre du procédé de l'invention par la passerelle mobile de la figure 2 ;
- la figure 4 présente une vue schématique de l'architecture physique de la passerelle mobile ou d'une carte multi-accès selon l'invention.

### 5 DESCRIPTION DETAILLEE DE L'INVENTION

### 5.1 Rappel du principe de l'invention

L'invention permet à un utilisateur de disposer des services auquel il a souscrit, en particulier lorsqu'il se trouve en situation de mobilité. L'invention apporte ainsi un agrément supplémentaire à l'utilisateur puisqu'elle autorise celui-ci à profiter par exemple d'un accès à haut débit à l'Internet lors même qu'il ne se trouve pas à son domicile. De même, il peut profiter de tous les services qui sont liés à son abonnement (télévision numérique, messagerie, etc.). L'invention permet donc à un utilisateur d'accéder à un ensemble de services auxquels il a préalablement souscrit, quel que soit l'endroit où il se trouve. L'utilisateur pourra notamment, à titre d'exemple illustratif et non limitatif de l'invention, bénéficier d'une connexion ADSL à laquelle il a souscrit auprès d'un opérateur et à laquelle il a l'habitude de se connecter depuis son terminal d'ordinateur de bureau de sa maison, même s'il est en déplacement et hébergé en un lieu ne bénéficiant pas d'une telle connexion haut débit, mais d'une simple prise téléphonique RTC.

A titre de deuxième exemple illustratif et non limitatif de l'invention, un utilisateur ayant souscrit à un forfait « Internet/Télévision/Téléphonie » peut, grâce au procédé de l'invention, profiter de ce forfait de services où qu'il se trouve (par exemple chez un ami), ce qui n'est pas possible compte tenu des techniques actuelles.

L'invention propose également un dispositif qui permet de mettre en œuvre ce procédé lorsqu'un utilisateur se trouve en situation de mobilité. Dans au moins un mode de réalisation, l'invention procure également l'avantage de permettre à des terminaux qui ne possèdent pas de fonctions de communication de mettre en œuvre au moins certains des services auxquels l'utilisateur a souscrit, à l'aide du dispositif de l'invention.

Dans au moins un mode de réalisation, l'invention se présente sous la forme d'un dispositif de contrôle (par exemple une carte à puce de type carte « SIM » ou une carte au format normalisé telle qu'une carte MMC ou une carte SD ou encore une carte « Compact Flash »). Un tel dispositif de contrôle est apte à mettre en œuvre le procédé de l'invention et à procurer à l'utilisateur qui le possède au moins une partie de services auquel il a souscrit.

Ainsi, un tel dispositif de contrôle selon l'invention permet notamment :
- de proposer des services de manière uniforme à l'utilisateur ;
- d'étendre les fonctions de communication de terminaux hétérogènes, tels que des appareils photo ou des lecteurs mp3 ;
- d'associer l'identité d'un utilisateur aux services auxquels il souscrit ;
- de transférer automatiquement de l'information entre des terminaux hétérogènes (par exemple de l'information de contexte ou des données utilisateurs).

Dans un mode de réalisation particulier de l'invention, un tel dispositif de contrôle peut se présenter sous la forme d'une carte à puce qui intègre à la fois :
- des fonctions «SIM» (de l'anglais « Subscriber Identity Module » pour « Module d'Identification de Souscription ») avancées intégrant :
   - une identification de l'utilisateur ;
   - une reconnaissance automatique des droits d'accès et des abonnements à partir d'un système d'information d'un réseau (à l'aide par exemple de données UPM, de l'anglais « User Profile Managment » pour « Gestion de profil d'utilisateur ») ;
   - des clés de chiffrement propres à l'utilisateur ;
- une unité de stockage, comprenant :
   - un stockage tampon (permettant de stocker des contenus : photos, vidéos, sons) ;
   - une zone de stockage de messages (email, SMS, MMS, etc.)
- des systèmes de connectique et d'accès aux réseaux tels que :
   - un système de transmission mobile (3G, GPRS, DVB-H...) ;
   - un système de connexion Wi-fi/Bluetooth/UWB ;
   - un mécanisme de reconnaissance automatique des meilleurs réseaux pour transmission (voie descendante et remontante) ;
   - une gestion dynamique et sans couture des réseaux et de la bande passante ;
   - une radio logicielle ;
- des programmes de type « Middleware » et logiciels embarqués assurent les fonctions de :
   - Passerelle, routeur, micro-serveur d'applications
   - Déport sur matériel tiers des interfaces de l'utilisateur ;
   - intégration possible dans l'interface du terminal ;
   - Gestion dynamique et sans couture des formats de restitution en fonction du matériel cible (ex taille écran et images/secondes).
- Des mécanismes de personnalisation comprenant :
   - un carnet d'adresses ;
   - une liste de préférences (interfaces...) ;
   - des comptes de messagerie.

Ainsi, dans ce mode de réalisation, l'invention peut être considérée comme un dispositif de contrôle ne disposant pas d'interface utilisateur, mais comprenant un ensemble de fonctions intégrées. L'utilisateur n'est donc pas à même d'interagir directement avec ce dispositif de contrôle, mais il peut l'utiliser en combinaison avec d'autres terminaux en sa possession, tel qu'un appareil photo numérique ou un lecteur de MP3 ou encore un dispositif de localisation (GPS), de manière à rendre ces derniers communicants ou à leur permettre de mettre en œuvre d'autres services que ceux qu'ils mettent en œuvre à l'origine.

Une telle possibilité est offerte grâce à la mise en œuvre, selon l'invention, de moyens de contrôle du terminal auquel le dispositif de contrôle est connecté. Ces moyens de contrôle peuvent se présenter sous la forme d'un microcontrôleur dédié au pilotage de l'interface.

Dans une variante du dispositif de contrôle de l'invention, ce microcontrôleur, par exemple de type «ASIC» (de l'anglais « Application-specific integrated circuit » pour « Circuit Intégré Spécialisée »), peut recevoir, en temps réel et de la part d'une entité du réseau de communication auquel le dispositif de contrôle est connecté, un microprogramme *mP* spécifique apte à contrôler le terminal dans lequel le dispositif de contrôle selon l'invention est inséré.

Dans ce mode de réalisation, lorsque le dispositif de contrôle est inséré dans le terminal, il récupère un identifiant de terminal (par exemple la marque et le modèle de celui-ci) et transfère cet identifiant de terminal, par le biais des moyens de communication mobiles qu'il intègre, à une entité du réseau qui dispose d'une bibliothèque de microprogrammes. L'entité sélectionne le microprogramme *mP* de contrôle adapté au terminal dans lequel le dispositif de contrôle est inséré et transfère ce microprogramme *mP* au dispositif de contrôle afin qu'il puisse contourner le microprogramme d'origine utilisé au sein du terminal et ainsi piloter ou prendre le contrôle du terminal.

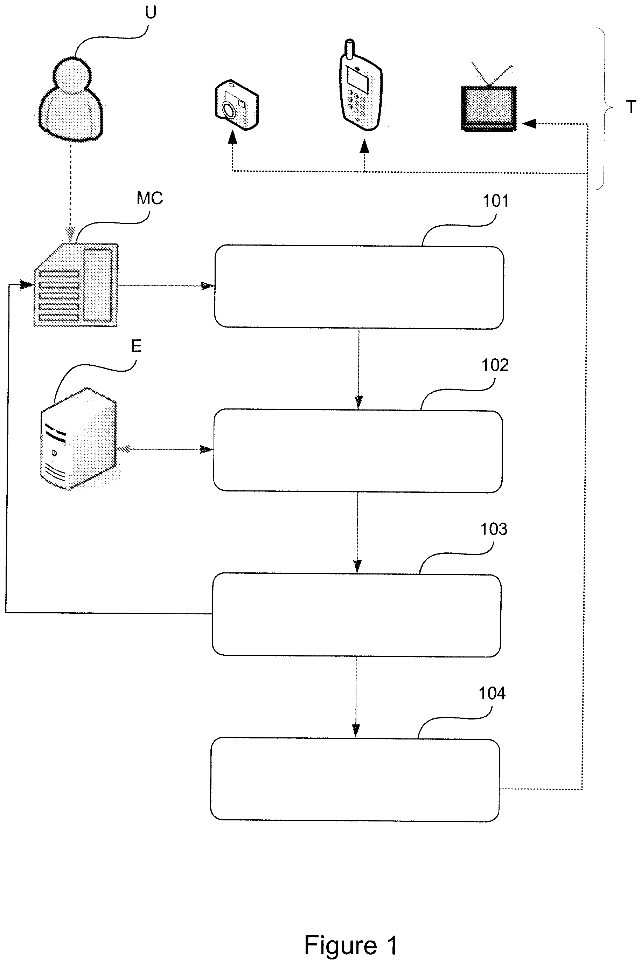

On présente, en relation avec la figure 1, un synoptique du procédé de l'invention. Un utilisateur (U) dispose d'un terminal (T) tel que par exemple un appareil photo numérique, un téléphone, une télévision ou un récepteur numérique terrestre). Il a préalablement souscrit à des services qui sont accessibles via un premier réseau de communication (non représenté). L'utilisateur détient également un dispositif de contrôle (MC) qui peut être logé dans le terminal (T) de l'utilisateur. Dans un premier temps, le dispositif de contrôle (MC) sélectionne (101) un second réseau de communication, parmi au moins deux réseaux de communication possibles (ce second réseau peut être identique au premier). Puis ce dispositif de contrôle (MC) transfère (102), via le second réseau de communication, un identifiant dudit utilisateur (ou un identifiant du dispositif de contrôle lui-même) à une entité de gestion (E) dudit premier réseau de communication. Cette dernière identifie l'utilisateur (et/ou le dispositif de contrôle). Le dispositif de contrôle réceptionne (103) au moins un paramètre de configuration du terminal de mise en œuvre des services (T), délivré par ladite entité de gestion (E). Le dispositif de contrôle (MC) configure (104) alors le terminal en fonction du paramètre de configuration, de façon qu'il assure la mise en œuvre des services sur le premier réseau.

Ainsi, plus généralement, le procédé de l'invention permet à un utilisateur d'accéder à des services préalablement souscrits, en configurant dynamiquement un dispositif de mise en œuvre de services dans l'objectif que ce dernier puisse accéder à de nouveaux services ou augmenter la qualité ou le nombre d'options disponibles pour un service donné.

### 5.2 Description d'un mode de réalisation

### 5.2.1 Carte multi accès

Dans un mode de réalisation spécifique, le dispositif de contrôle selon l'invention se présente sous la forme d'une carte multi accès qui comprend des moyens de connexion à au moins un réseau de communication et des moyens d'accès à au moins un service associé à un utilisateur ou à un réseau d'un opérateur.

Dans ce mode de réalisation, l'invention permet de fournir des fonctions de communication et d'accès aux services de l'utilisateur au travers d'un accès à une interface d'un dispositif de mise en œuvre au sein duquel elle est insérée. Une telle carte peut ainsi se servir de l'interface du dispositif dans lequel elle est insérée pour interagir avec l'utilisateur. Ainsi, par exemple, la carte selon l'invention peut se présenter sous la forme d'une carte mémoire au format « CompactFlash » comprenant un micro processeur, des mémoires volatiles et permanentes, des moyens de connexion à plusieurs réseaux de communications. Cette carte est insérée dans un appareil photo numérique comme une carte mémoire classique.

Une fois insérée dans l'appareil photo et activée (c'est-à-dire que l'utilisateur ou la carte a été authentifié sur un réseau de l'opérateur ou du fournisseur de service, tel que le réseau GSM), la carte identifie le modèle et la marque de l'appareil photo. Elle se connecte alors, par le biais d'un réseau de communication disponible (tel qu'un réseau cellulaire de radiocommunication de troisième génération ou un réseau WiFi) pour obtenir, auprès d'une entité d'un réseau (tel que le réseau Internet), un microprogramme à utiliser pour se servir de l'interface de l'appareil photo. Pour les modèles de terminaux les plus courants, ce microprogramme peut déjà être présent au sein de la carte multi accès, de sorte qu'il n'est pas nécessaire de solliciter une entité de réseau complémentaire.

On peut noter que dans le cas (de plus en plus fréquent) ou l'appareil photo utilise une distribution spécifique et connue d'un système d'exploitation à source ouverte, la carte peut déjà contenir le logiciel permettant piloter l'interface de l'appareil photo et qu'il n'est donc pas nécessaire de le télécharger. Une telle distribution de système d'exploitation peut être PeeWee Linux, RTLinux et RTAI, TUXIA, Red Hat Embedded Linux, µC/Linux, Embedix ou encore Hard Hat Linux (Toutes Marques Déposées).

Dans ce mode de réalisation du dispositif de contrôle sous la forme d'une carte multi accès, l'utilisateur dispose alors toujours de la possibilité de prendre des photographies avec son appareil photo, mais il dispose également d'un accès à son service de partage de photo, accessible par exemple par l'intermédiaire de son opérateur ou de tout site Internet de partage de photographies. Il peut également utiliser la carte selon l'invention pour transmettre un courrier électronique, par l'intermédiaire des adresses de courrier et du logiciel d'expédition de courrier (qui respecte les normes POP3 et IMAP) dont dispose la carte. Il est également possible que l'utilisateur se connecte directement auprès d'un cadre photo numérique (le sien ou celui d'une personne de sa connaissance) pour transmettre ses photos. Dans ce mode de réalisation, ces services sont mis en œuvre par la carte multi accès lorsqu'elle est insérée dans un appareil photo numérique ou dans tout autre dispositif apte à recevoir une telle carte.

En d'autres termes, la carte de l'invention permet d'enrichir de fonctions de communication et de partage, des dispositifs qui en sont dépourvus à l'origine, de façon à les rendre communicants et donc compatibles avec des services qu'ils peuvent désormais accéder et avec lesquels ils peuvent interagir à distance.

D'autres possibilités de mise en œuvre de la carte selon l'invention sont imaginables, telle que l'utilisation au sein d'un autoradio pour permettre à un utilisateur d'écouter en « streaming » (« lecture en continue ») de la musique qu'il possède sur son propre ordinateur ou encore d'écouter des « webradio » ce qui n'est pas possible à l'heure actuelle.

D'autres possibilités peuvent également être offertes aux utilisateurs quand la carte est utilisée dans un téléphone mobile. Dans ce cas, comme un tel terminal dispose de capacités de calcul plus ou moins avancées, une partie des fonctions de la carte peuvent être embarquées sous la forme d'un logiciel exécuté par le terminal mobile, tels que le « middleware » (logiciels intermédiaire) et certains logiciels tels que le logiciel « passerelle », un routeur, un micro-serveur d'applications.

Une telle mise en œuvre présente l'avantage de permettre un déploiement plus rapide de la solution globale de mobilité des services et de faciliter l'accès d'un utilisateur nomade à ses différents services de communication qu'il a préalablement souscrits auprès d'un opérateur ou d'un fournisseur de services. 5.2.2 Passerelle mobile

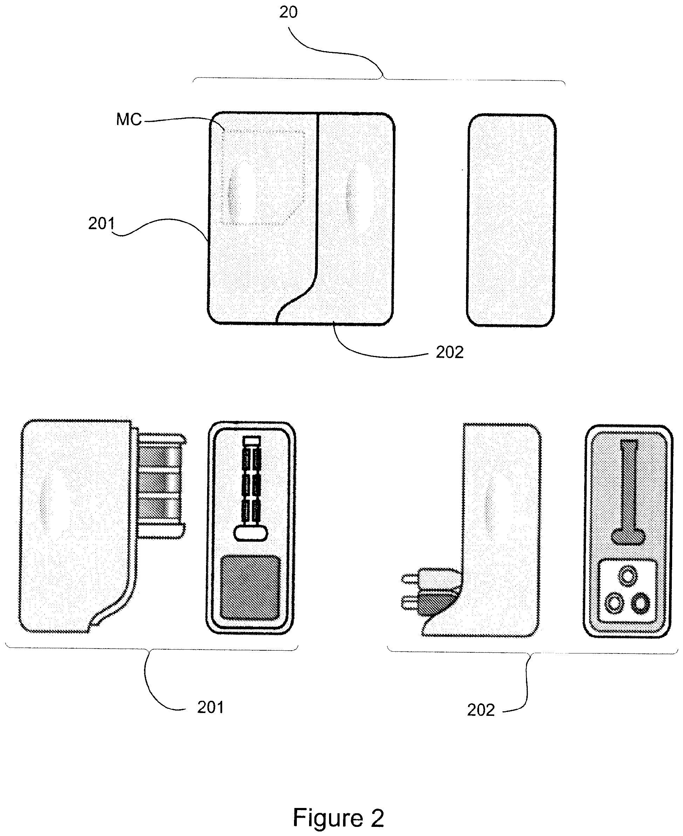

On décrit, en relation avec la figure 2, un mode de réalisation spécifique d'un dispositif de contrôle selon l'invention. Dans ce mode de réalisation, le dispositif de contrôle selon l'invention est inséré dans une passerelle mobile.

Une passerelle résidentielle est un équipement qui sert d'interface entre un réseau d'un opérateur et un réseau local d'un utilisateur. Une telle passerelle résidentielle est destinée à l'échange d'un flux de données entre un terminal client connecté à un réseau local de transmission de données et un réseau externe de transmission de données.

Une passerelle mobile selon l'invention remplit notamment des fonctions similaires à celles d'une passerelle résidentielle et possède des caractéristiques lui permettant de mettre en œuvre le procédé de l'invention en étant :
- soit insérée dans une prise téléphonique ;
- soit posée et activée à un endroit où se trouve l'utilisateur. Si elle n'est pas insérée dans une prise téléphonique, la passerelle mobile peut quand même être activée, c'est-à-dire qu'elle peut fonctionner, par l'intermédiaire d'un réseau mobile.

Dans un tel mode de réalisation de l'invention, la passerelle mobile comprend un dispositif de contrôle (MC) chargé de la mise en œuvre du procédé de l'invention. Dans ce mode de réalisation, la passerelle mobile est donc un dispositif de mise en œuvre de service au sens de ceux décrit dans la figure 1. La passerelle mobile 20 se présente sous la forme d'un boîtier en deux parties comprenant :
- une première partie (201) qui comprend les fonctions de passerelle résidentielle et qui embarque le dispositif de contrôle. Elle présente un embout male apte à être inséré dans une prise téléphonique. Cet embout lui permet d'accéder au réseau téléphonique RTC classique ainsi qu'aux réseaux hauts débits basés sur les technologies xDSL.
- une deuxième partie (202) qui comprend des moyens de connexion à un terminal de restitution, tel qu'une télévision. Elle est agencée pour qu'en position fermée elle puisse recevoir l'embout male.

Dans ce mode de réalisation, la connexion entre les deux parties (201, 202) est assurée automatiquement par un lien sans fil large bande, tel que le WiFi (de l'anglais « Wireless Fidelity » ou UWB (de l'anglais « Ultra WideBand »), de façon à permettre à la première et à la deuxième partie de communiquer et de permettre à un terminal (par exemple un ordinateur portable) de disposer d'un accès à un réseau de communication et à des services accessibles au travers un tel réseau.

Le dispositif de contrôle MC comprend les fonctions préalablement décrites en relation avec la figure 1. Lorsque la passerelle résidentielle n'est pas insérée dans une prise téléphonique, elle peut fonctionner en utilisant une connexion sans fil large bande ou un réseau cellulaire mobile classique.

### 5.2.3 Procédé d'accès

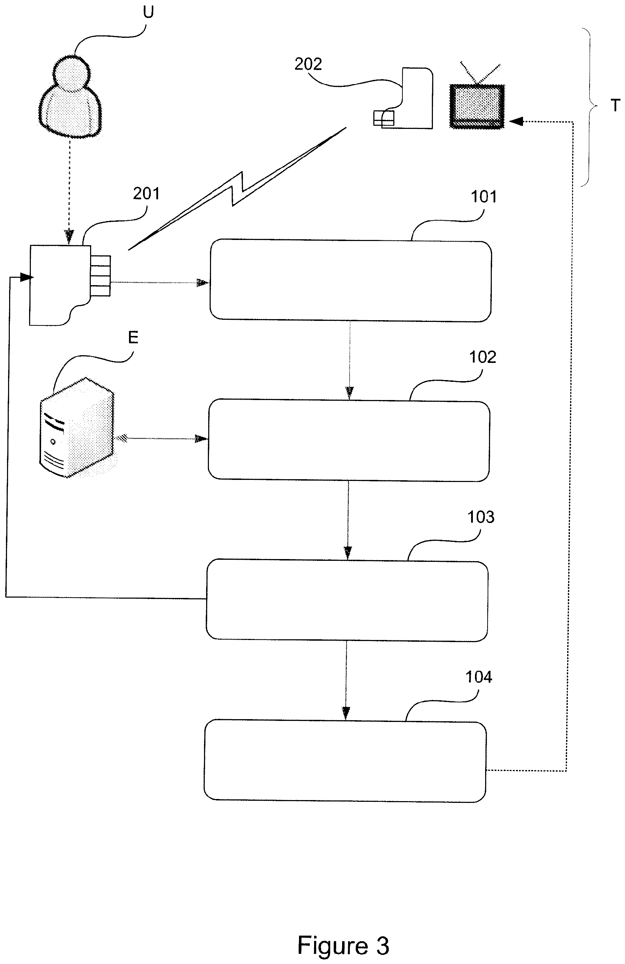

On présente ci-après, en relation avec la figure 3, un exemple d'exécution du procédé d'accès selon l'invention lorsque ce procédé est mis en œuvre par l'intermédiaire d'un dispositif de contrôle inséré dans une passerelle mobile telle que décrit préalablement.
- l'utilisateur insère la demi passerelle mobile (201) dans une prise téléphonique; Elle peut également être posée en n'importe quel endroit si celle-ci dispose de moyens d'établissement d'une connexion sans fil à un réseau de communication, par exemple du type réseau Internet ;
   Dans un mode de réalisation complémentaire de l'invention, les fonctions de la passerelle mobile sont directement intégrées dans une prise réseau ou téléphonique de foyers pour former un couple « passerelle/prise ». Dans ce cas le dispositif de contrôle est inséré dans cette « passerelle/prise » ou interagira avec elle via une liaison sans fil. Ainsi, la « passerelle/prise » récupère par exemple les identifiants, les droits par l'intermédiaire une connexion sans fil avec un autre terminal où est logé la carte multi accès (un terminal mobile par exemple)
- une fois insérée dans une prise téléphonique, la passerelle utilise la connexion de la ligne téléphonique fixe (101), si celle-ci est disponible. Si cette connexion n'est pas disponible, elle se connecte (101), comme s'il n'y avait pas de réseau fixe, via le réseau sans fil le plus adapté selon le lieu où elle se trouve (la passerelle sélectionne automatiquement le réseau sans fil disponible présentant les meilleures conditions) ;
- une connexion est établie entre la demi passerelle (201) et une entité (ou plusieurs) de gestion (E) qui intègre un serveur d'identification des utilisateurs et des dispositifs de contrôle ;
- le serveur d'identification vérifie (102) l'identité du dispositif de contrôle. L'identité peut-être fournie de différentes manières : à l'aide d'une adresse MAC, d'une carte SIM, de certificats d'authentification enregistrés au sein du dispositif de contrôle.
- un serveur de gestion de droits (« credentials »), par exemple disponible au niveau de l'entité de gestion (E), vérifie les droits qui sont associés à la passerelle mobile et/ou à l'utilisateur de celle-ci. Les droits sont par exemple les suivants : types d'accès autorisés, types de services à mettre en œuvre par le dispositif de contrôle, types de systèmes de paiement... ;
- le serveur de gestion de droits indique (103) alors aux différents systèmes techniques de l'opérateur quels sont les services qui sont attribués à la passerelle mobile et/ou à l'utilisateur de celle-ci et dans quel ordre ils doivent être mis en oeuvre :
   - type de réseau à activer, quel débit, quelle qualité de service ;
   - les services qui doivent être activés (TV, Téléphonie, etc.) ;
   - l'adaptation des formats de restitution des données qu'il convient de choisir en fonction du débit du réseau et/ou des types d'interfaces qui sont connectées à la demi passerelle (201) au moment de la connexion réseau (taille d'écran, définition...)
- la meilleure connexion que l'opérateur peut proposer est alors activée (104) :
   - basculement d'un type de connexion à un autre (ex RTC à ADSL),
   - l'accès aux services est activé ;
   - si nécessaire, des microprogrammes sont transférés sur la partie demi passerelle 201 pour une meilleure utilisation des services, par exemple pour prendre le contrôle d'un autre dispositif.
- la demi-passerelle (201) utilise une liaison sans fil pour restituer ou tout le moins donner accès à des services sur le terminal (T) via la demi-passerelle de restitution 202.

### 5.3 Sélection du meilleur réseau

On note que dans le cadre de l'invention, la carte multi-accès et la passerelle mobile peuvent choisir le meilleur réseau disponible pour réaliser une action.

Ainsi, par exemple, lorsque la passerelle mobile est insérée dans une prise téléphonique, elle peut dans un premier temps se connecter à l'Internet par le biais du réseau RTC classique (accès bas débit). Cette première connexion lui permet d'authentifier l'utilisateur (par exemple à l'aide de certificats) puis de requérir, auprès d'une entité de gestion une mise en œuvre d'un accès haut débit en fonction des services que l'authentification de l'utilisateur aura permis de qualifier.

La mise en œuvre de cet accès haut débit est également liée, selon l'invention, aux caractéristiques techniques de la ligne téléphonique.

Ainsi, par exemple, si un accès haut débit n'est pas possible, les services peuvent être restreints à ceux disponibles par le biais d'une communication bas débit.

Selon une caractéristique particulière de l'invention, l'entité de gestion avec laquelle la passerelle mobile dialogue dispose d'informations relatives aux exigences minimales, en termes de bande passante, pour mettre en œuvre tel ou tel service auquel l'utilisateur a souscrit. Ainsi, si un accès haut débit n'est pas possible, la passerelle mobile peut mettre en œuvre plusieurs connexions simultanées, telles que une connexion bas-débit de l'habitation dans laquelle se trouve l'utilisateur, une connexion WiFi à portée et une connexion à un réseau de téléphonie mobile. L'ensemble de ces connexions (c'est-à-dire l'ajout de tous les débits disponibles pour les connexions sélectionnées) permet alors de rendre le service initialement requit par l'utilisateur, par exemple la télévision.

### 5.4 Indexation de contenu

Dans l'état actuel de la technique, les contenus sont indexés par terminal. Cela signifie qu'un contenu qui se trouve être présent sur un terminal donné (tel qu'un ordinateur personnel) est indexé au sein de ce terminal. Il est pour le moment difficile d'accéder à distance à l'index des contenus, même si de nombreuses solutions ont récemment été envisagées dans ce domaine (voir notamment le serveur personnel de Microsoft (Marque Déposée) : « Microsoft Home Server ». Cependant, de tels serveurs ne permettent pas d'accéder à distance (c'est-à-dire hors du réseau local de l'utilisateur) aux contenus de manière efficace.

Le dispositif de l'invention offre une solution efficace à ce problème. Par exemple lorsque l'utilisateur accède à ses services par le biais d'une passerelle mobile (telle que présentée précédemment), l'invention permet également à l'utilisateur d'accéder aux contenus dont il dispose dans son réseau personnel. Pour ce faire, une passerelle (non mobile) que l'utilisateur utilise quand il n'est pas en situation de mobilité, indexe l'ensemble des contenus des terminaux du réseau local de l'utilisateur. Il s'agit bien d'une indexation, et non d'une copie de ces contenus (comme de nombreux serveurs savent le faire). La passerelle résidentielle (non mobile) surveille régulièrement ces équipements pour détecter leur présence sur un réseau afin :
- de mettre à disposition en réseau l'index des contenus disponibles sur les différents terminaux connectés ;
- de repérer les nouveaux contenus sur ces terminaux et les indexer ;
- de créer une connexion point à point entre les terminaux du réseau local et la passerelle mobile pour les échanges de fichier (en téléchargement ou en « streaming »).

Ainsi, lors de l'authentification de l'utilisateur, l'entité de gestion en charge de l'attribution des services peut également fournir à la passerelle mobile selon l'invention, une adresse IP d'une passerelle résidentielle et les données technique permettant d'établir une communication avec cette passerelle (il peut s'agir d'informations de connexion nécessaires aux différents protocoles de communication à mettre en œuvre).

Une telle solution présente de nombreux avantages puisqu'elle permet :
- de connaître en permanence les contenus disponibles :
   - dès qu'un terminal est connecté sur un réseau, son contenu est accessible via l'index de la passerelle résidentielle ;
- de fournir une offre riche de contenus sans solution de centralisation
   - Le stockage des contenus est réparti sur différents terminaux du réseau local ;
   - les échanges entre la passerelle résidentielle et la passerelle mobile se font en peer-to-peer ;
   - cette solution ne nécessite pas d'investissement en solutions serveur pour l'opérateur.
   - Dès que l'utilisateur lance une "playlist" (qu'il possède, qu'il télécharge ou qu'il lance depuis le réseau), le système va automatiquement rechercher dans les bases de contenu auxquelles il a accès et lui permet de lire les contenus de cette "playlist", soit en jouant les morceaux depuis le terminal dans lequel réside le dispositif de contrôle , soit en téléchargeant les contenus vers ce terminal, soit en lançant leur lecture depuis l'endroit où ils résident (serveur commercial, serveur de stockage personnel, PC distant, lecteur MP3 connecté...) via le réseau, en prenant en compte la gestion des droits d'accès à ces contenus (droits d'accès qui peuvent être fournis par le micro-dispositif).

### 5.5 Autres caractéristiques optionnelles et avantages

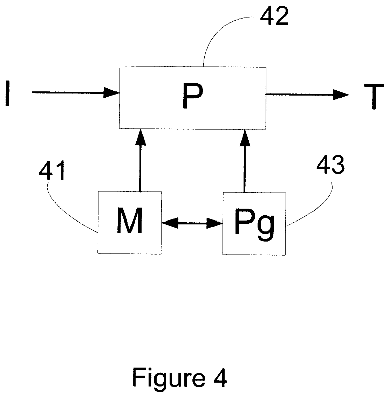

On présente, en relation avec la figure 4, une structure simplifiée d'un dispositif selon l'invention (passerelle mobile ou carte).

Un tel dispositif comprend une mémoire 41 constituée d'une mémoire tampon, une unité de traitement 42, équipée par exemple d'un microprocesseur P, et pilotée par le programme d'ordinateur 43, mettant en œuvre le procédé de d'accès selon l'invention.

A l'initialisation, les instructions de code du programme d'ordinateur 43 sont par exemple chargées dans une mémoire RAM avant d'être exécutées par le processeur de l'unité de traitement 42. L'unité de traitement 42 reçoit en entrée un signal d'activation (insertion dans une prise téléphonique ou activation d'un bouton marche/arrêt). Le microprocesseur de l'unité de traitement 42 met en œuvre les étapes du procédé décrit précédemment, selon les instructions du programme d'ordinateur 44, pour identifier un réseau auquel se connecter, identifier l'utilisateur, réceptionner des paramètres d'accès, et configurer un terminal (ou s'auto configurer). Pour cela, le moteur comprend, outre la mémoire tampon 41, des moyens de connexions à plusieurs réseaux de communication et des moyens d'authentification auprès d'une entité spécifique du réseau de communication de mise en œuvre des services. Il comprend également des moyens de configuration de terminaux. Ces moyens sont pilotés par le microprocesseur de l'unité de traitement 42.

## Revendications

1. Procédé d'accès à au moins un service préalablement souscrit par un utilisateur, et accessible via au moins un premier réseau de communication,
ledit procédé comprenant les étapes suivantes :
- sélection par un dispositif de contrôle, d'un second réseau de communication, parmi au moins deux réseaux de communication possibles ;
- transmission, par ledit dispositif de contrôle, via ledit second réseau de communication, d'au moins un identifiant dudit utilisateur, à destination d'une entité de gestion dudit premier réseau de communication ;
- réception, par ledit dispositif de contrôle, d'au moins un paramètre de configuration d'un dispositif de mise en œuvre dudit service, délivré par ladite entité de gestion ;
- configuration dudit dispositif de mise en œuvre dudit service, en fonction dudit paramètre de configuration, de façon qu'il puisse mettre en œuvre ledit service par l'intermédiaire dudit premier réseau,
ledit procédé étant **caractérisé en ce qu'**il comprend une étape d'adaptation dudit au moins un service à mettre en œuvre, ladite étape tenant compte d'au moins un paramètre représentatif d'au moins un point d'accès audit premier réseau.

2. Procédé selon la revendication, **caractérisé en ce qu'**il comprend une étape d'authentification dudit utilisateur auprès de ladite première entité au moyen dudit au moins un identifiant dudit utilisateur et d'au moins un certificat d'authentification contenu dans ledit dispositif de contrôle.

3. Procédé selon l'une quelconque des revendications 1 à 2, **caractérisé en ce qu'**il comprend une étape de pilotage, par ledit dispositif de contrôle, dudit dispositif de mise en œuvre dudit au moins un service.

4. Procédé selon la revendication 3 **caractérisé en ce que**, préalablement à ladite étape de pilotage, ledit procédé comprend :
- une étape d'obtention d'un identifiant dudit dispositif de mise en œuvre ;
- une étape d'obtention, par ledit dispositif de contrôle, auprès d'une deuxième entité dudit deuxième réseau de communication, d'un microprogramme de pilotage adapté au pilotage dudit dispositif de mise en œuvre dudit au moins un service.

5. Procédé selon l'une quelconque des revendications 1 à 4, **caractérisé en ce que** ledit premier réseau de communication et ledit deuxième réseau de communication sont un seul et même réseau de communication.

6. Procédé selon l'une quelconque des revendications 1 à 5, **caractérisé en ce que** ledit premier réseau de communication est un réseau filaire et **en ce que** ledit deuxième réseau de communication est un réseau mobile.

7. Dispositif de contrôle permettant un accès à au moins un service préalablement souscrit par un utilisateur, ledit service étant mis en œuvre via au moins un dispositif de mise en œuvre, **caractérisé en ce qu'**il comprend :
- des moyens de sélection d'un premier réseau de communication parmi une pluralité de réseaux de communication disponibles ;
- des moyens de transfert, par l'intermédiaire dudit premier réseau sélectionné, d'au moins un identifiant dudit utilisateur, à destination d'une entité de gestion d'un deuxième réseau de communication ;
- des moyens de réception d'au moins un paramètre de configuration dudit dispositif de mise en œuvre dudit au moins un service ;
- des moyens d'adaptation dudit au moins un service en tenant compte d'au moins un paramètre représentatif d'au moins un point d'accès audit premier réseau.

8. Passerelle mobile, **caractérisé en ce qu'**elle comprend :
- un dispositif de contrôle selon la revendication 7 ;
- des moyens de connexion à un réseau de communication filaire ;
- des moyens de restitution d'au moins un service préalablement souscrit par un utilisateur ;
- des moyens de communication entre lesdits moyens de connexion audit réseau de communication filaire et lesdits moyens de restitution dudit au moins un service.

9. Produit programme d'ordinateur téléchargeable depuis un réseau de communication et/ou stocké sur un support lisible par ordinateur et/ou exécutable par un microprocesseur, **caractérisé en ce qu'**il comprend des instructions de code de programme pour l'exécution du procédé de d'accès selon l'une au moins des revendications 1 à 6, lorsqu'il est exécuté sur un dispositif de contrôle selon l'invention

## Patentansprüche

1. Verfahren zum Zugriff auf wenigstens einen Dienst, der zuvor von einem Benutzer abonniert wurde und über wenigstens ein erstes Kommunikationsnetz zugänglich ist,
wobei das Verfahren die folgenden Schritte umfasst:
- Auswahl, durch eine Steuervorrichtung, eines zweiten Kommunikationsnetzes aus wenigstens zwei möglichen Kommunikationsnetzen;
- Übertragung, durch die Steuervorrichtung über das zweite Kommunikationsnetz, wenigstens einer Kennung des Benutzers an eine Verwaltungseinheit des ersten Kommunikationsnetzes;
- Empfang, durch die Steuervorrichtung, wenigstens eines Konfigurationsparameters einer Vorrichtung zur Ausführung des Dienstes, der von der Verwaltungseinheit geliefert wird;
- Konfiguration der Vorrichtung zur Ausführung des Dienstes in Abhängigkeit von dem Konfigurationsparameter, derart, dass sie den Dienst über das erste Netz ausführen kann,
wobei das Verfahren **dadurch gekennzeichnet ist, dass** es einen Schritt der Anpassung des wenigstens einen auszuführenden Dienstes umfasst, wobei dieser Schritt wenigstens einen Parameter berücksichtigt, der für wenigstens einen Zugangspunkt zu dem ersten Netz repräsentativ ist.

2. Verfahren nach Anspruch 1, **dadurch gekennzeichnet, dass** es einen Schritt der Authentifizierung des Benutzers bei der ersten Einheit mittels der wenigstens einen Kennung des Benutzers und wenigstens eines Authentifizierungszertifikats, das in der Steuervorrichtung enthalten ist, umfasst.

3. Verfahren nach einem der Ansprüche 1 bis 2, **dadurch gekennzeichnet, dass** es einen Schritt der Steuerung, durch die Steuervorrichtung, der Vorrichtung zur Ausführung des wenigstens einen Dienstes umfasst.

4. Verfahren nach Anspruch 3, **dadurch gekennzeichnet, dass** das Verfahren vor dem Schritt der Steuerung umfasst:
- einen Schritt der Gewinnung einer Kennung der Ausführungsvorrichtung;
- einen Schritt der Gewinnung, durch die Steuervorrichtung von einer zweiten Einheit des zweiten Kommunikationsnetzes, eines Steuerungsmikroprogramms, das für die Steuerung der Vorrichtung zur Ausführung des wenigstens einen Dienstes ausgelegt ist.

5. Verfahren nach einem der Ansprüche 1 bis 4, **dadurch gekennzeichnet, dass** das erste Kommunikationsnetz und das zweite Kommunikationsnetz ein und dasselbe Kommunikationsnetz sind.

6. Verfahren nach einem der Ansprüche 1 bis 5, **dadurch gekennzeichnet, dass** das erste Kommunikationsnetz ein kabelgebundenes Netz ist, und dadurch, dass das zweite Kommunikationsnetz ein Mobilfunknetz ist.

7. Steuervorrichtung, welche einen Zugriff auf wenigstens einen Dienst ermöglicht, der zuvor von einem Benutzer abonniert wurde, wobei der Dienst über wenigstens eine Ausführungsvorrichtung ausgeführt wird, **dadurch gekennzeichnet, dass** sie umfasst:
- Mittel zur Auswahl eines ersten Kommunikationsnetzes aus mehreren verfügbaren Kommunikationsnetzen;
- Mittel zur Übertragung, über das erste ausgewählte Netz, wenigstens einer Kennung des Benutzers an eine Verwaltungseinheit eines zweiten Kommunikationsnetzes;
- Mittel zum Empfang wenigstens eines Konfigurationsparameters der Vorrichtung zur Ausführung des wenigstens einen Dienstes;
- Mittel zur Anpassung des wenigstens einen Dienstes unter Berücksichtigung wenigstens eines Parameters, der für wenigstens einen Zugangspunkt zu dem ersten Netz repräsentativ ist.

8. Mobiles Gateway, **dadurch gekennzeichnet, dass** es umfasst:
- eine Steuervorrichtung nach Anspruch 7;
- Mittel zum Anschluss an ein kabelgebundenes Kommunikationsnetz;
- Mittel zur Erbringung wenigstens eines Dienstes, der zuvor von einem Benutzer abonniert wurde;
- Mittel zur Kommunikation zwischen den Mitteln zum Anschluss an das kabelgebundene Kommunikationsnetz und den Mitteln zur Erbringung des wenigstens einen Dienstes.

9. Computerprogrammprodukt, das aus einem Kommunikationsnetz herunterladbar und/oder auf einem computerlesbaren Medium gespeichert und/oder von einem Mikroprozessor ausführbar ist, **dadurch gekennzeichnet, dass** es Programmcodeanweisungen zur Ausführung des Verfahrens zum Zugriff nach wenigstens einem der Ansprüche 1 bis 6, wenn es auf einer Steuervorrichtung gemäß der Erfindung ausgeführt wird, umfasst.

## Claims

1. Method of accessing at least one service previously subscribed to by a user, and accessible via at least one first communication network,
said method comprising the following steps:
- selection by a control device, of a second communication network, from among at least two possible communication networks;
- transmission, by said control device, via said second communication network, of at least one identifier of said user, destined for a management entity of said first communication network;
- reception, by said control device, of at least one configuration parameter of a device for implementing said service, delivered by said management entity;
- configuration of said device for implementing said service, as a function of said configuration parameter, in such a way that it can implement said service by way of said first network,
said method being **characterized in that** it comprises a step of adapting said at least one service to be implemented, said step taking account of at least one parameter representative of at least one access point for said first network.

2. Method according to the claim, **characterized in that** it comprises a step of authenticating said user with said first entity by means of said at least one identifier of said user and of at least one authentication certificate contained in said control device.

3. Method according to either one of Claims 1 and 2, **characterized in that** it comprises a step of driving, by said control device, said device for implementing said at least one service.

4. Method according to Claim 3, **characterized in that**, prior to said driving step, said method comprises:
- a step of obtaining an identifier of said implementation device;
- a step of obtaining, by said control device, from a second entity of said second communication network, a driving microprogram adapted for driving said device for implementing said at least one service.

5. Method according to any one of Claims 1 to 4, **characterized in that** said first communication network and said second communication network are one and the same communication network.

6. Method according to any one of Claims 1 to 5, **characterized in that** said first communication network is a wired network and **in that** said second communication network is a mobile network.

7. Control device allowing access to at least one service previously subscribed to by a user, said service being implemented via at least one implementation device, **characterized in that** it comprises:
- means for selecting a first communication network from among a plurality of available communication networks;
- means for transferring, by way of said first selected network, at least one identifier of said user, destined for a management entity of a second communication network;
- means for receiving at least one configuration parameter of said device for implementing said at least one service;
- means for adapting said at least one service taking account of at least one parameter representative of at least one access point for said first network.

8. Mobile gateway, **characterized in that** it comprises:
- a control device according to Claim 7;
- means of connection to a wired communication network;
- means of rendering of at least one service previously subscribed to by a user;
- means of communication between said means of connection to said wired communication network and said means of rendering of said at least one service.

9. Computer program product downloadable from a communication network and/or stored on a medium readable by computer and/or executable by a microprocessor, **characterized in that** it comprises program code instructions for the execution of the method of access according to one at least of Claims 1 to 6, when it is executed on a control device according to the invention.
